Europäisches Patentamt

European Patent Office

Office européen des brevets

(19)

(11) Veröffentlichungsnummer: **0 224 444**
**B1**

(12)                              EUROPÄISCHE PATENTSCHRIFT

(45) Veröffentlichungstag der Patentschrift:
**09.05.90**

(51) Int. Cl.⁵: **C25F 3/04**, B01D 71/02

(21) Anmeldenummer: **86810522.2**

(22) Anmeldetag: **17.11.86**

(54) **Verfahren zur Herstellung einer teildurchlässigen Membran.**

(30) Priorität: **25.11.85 CH 5009/85**

(43) Veröffentlichungstag der Anmeldung:
**03.06.87 Patentblatt 87/23**

(45) Bekanntmachung des Hinweises auf die Patenterteilung:
**09.05.90 Patentblatt 90/19**

(84) Benannte Vertragsstaaten:
**AT BE CH DE ES FR GB GR IT LI LU NL SE**

(56) Entgegenhaltungen:
**DE-A- 3 120 086**
**US-A- 3 850 762**

(73) Patentinhaber: **ALUSUISSE-LONZA SERVICES AG,
Feldeggstrasse 4, CH-8034 Zürich(CH)**

(72) Erfinder: **Textor, Marcus, Abendstrasse 15,
CH-8200 Schaffhausen(CH)**
Erfinder: **Werner, Martin, Hansjakobstrasse 16,
D-7700 Singen(DE)**
Erfinder: **Franschitz, Wilhelm, Büchelerstrasse 12,
CH-8212 Neuhausen(CH)**

**Beschreibung**

Die Erfindung betrifft ein Verfahren zur Herstellung einer teildurchlässigen Membran aus einer Aluminiumfolie mittels elektrolytischer Aetzung, sowie die Verwendung dieser Membran.

Teildurchlässige Membrane werden bei einer Reihe von Trennverfahren eingesetzt, bei denen in einem flüssigen oder gasförmigen Medium gelöste oder dispers verteilte Partikel separiert oder Gase getrennt werden sollen.

Die gewöhnlich dazu eingesetzten Membrane basieren auf Polymer-Folien und -Hohlfibern. Diesen haften jedoch einige Mängel an, welche sich für gewisse Anwendungen gravierend auswirken: beschränkte thermische Stabilität (verunmöglicht teilweise eine Sterilisation), beschränkte Stabilität in organischen Lösungsmitteln, Quellung in Wasser, zumeist fehlende elektrische Leitfähigkeit (für Sensoranwendungen).

Zur teilweisen Abhilfe bei einigen Anwendungen ist ein Verfahren zur Herstellung von Membranen mit Porendurchmesser von 0,2 bis 10 µm aus Aluminium bekannt, bei welchem eine rekristallisierte Aluminiumfolie elektrolytisch geätzt wird, wobei in einer ersten Aetzstufe ein zeitlich konstantes Anodenpotential oberhalb des Lochfrasspotentials des Aluminiums und in einer zweiten Aetzstufe ein zeitlich konstantes Anodenpotential unterhalb des Lochfrasspotentials eingesetzt wird. Zur weiteren Verengung der Poren wird vorgeschlagen, auf der geätzten Folie anodisch eine Aluminiumoxidschicht oder mittels Kochbehandlung in Wasser eine Aluminiumoxidhydratschicht zu erzeugen, womit Porendurchmesser ab 0,002 µm erreichbar sind.

Derart hergestellten Aluminiummembranen haften jedoch entscheidende Nachteile an:
Die potentiostatische Aetzung ist in der Praxis sehr schwierig zu kontrollieren. Insbesondere besteht die Gefahr, dass kleinste Abweichungen des effektiven Potentials vom optimalen Wert zu unerwünschtem Mikrolochfrass führen, welcher die Verwendung als Membranfolien ausschliesst. Noch einschneidender ist die Tatsache, dass nach obgenanntem Verfahren hergestellte Membrane unstabil sind, sobald sie zur Filtration von wässrigen Medien oder nichtwässrigen Medien mit geringsten Wasseranteilen eingesetzt werden. Diese Unstabilität äussert sich in einem raschen Abfall des transmembranen Flusses zu Werten, die nach einigen Stunden typisch noch 5 bis 10 % des Anfangwertes betragen und damit für Filtrationsmembrane im Vergleich mit konventionellen Polymermembranfolien ungenügend und uninteressant sind. Dieser Abfall wird sowohl bei einseitig wie bei beidseitig geätzten Folien und sowohl bei blanken als auch bei formierten, mit einer anodischen Sperraluminiumoxidschicht versehenen Folien beobachtet.

Der Erfindung liegt daher die Aufgabe zugrunde, ein Verfahren zur Hestellung einer teildurchlässigen Membran bereitzustellen, welches von Aluminiumfolien ausgeht, eine elektrolytische Aetzung einsetzt und die obgenannten Mängel --Mikrolochfrass, Unstabilität -- beseitigt.

Erfindungsgemäss wird die Aufgabe dadurch gelöst, dass eine Aluminiumfolie von 20 bis 200 µm Dicke im nichtrekristallisierten Zustand mit einer Stromdichte im Bereich von 2 bis 20 kA/m² in einem Elektrolyt galvanostatisch geätzt wird und zur Stabilisierung der Oberfläche Hydratationsreaktionsverhindernd nachbehandelt wird.

Die zu ätzenden Folien können in kaltgewalztem oder im nichtrekristallisierend rückgeglühten Zustand vorliegen.

Die Aetzung einer rekristallisierend geglühten Folie jedoch würde zu einer ungenügenden Porendichte führen.

Zur Ermöglichung der im Filterbetrieb erforderlichen Durchflussrate, sowie zur Erleichterung der gleichmässigen Aetzung darf die Aluminiumfolie höchstens eine Dicke von 200 µm aufweisen. Damit wird vermieden, dass beim Trennverfahren die allfällig benötigte Druckdifferenz über der Membran zu hoch wird. Folien einer Dicke von weniger als 20 µm weisen eine ungenügende mechanische Stabilität auf und zeigen eine erhöhte Gefahr unkontrollierter Durchätzung. Als Aetzbad eignen sich bevorzugt chloridhaltige Elektrolyte im Temperaturbereich von 60 bis 100 °C. Insbesondere bewährt haben sich Elektrolyte folgender Zusammensetzung:
Chlorid-Konzentration 1 bis 4 M; Säure oder Alkalimetallsalze der Anionen Borat, Phosphat, Sulfat, Nitrat in einer Konzentration von 0,1 bis 1 M (M: = Mol/Liter).

Die insgesamt umgesetzte Ladung soll 0,15 bis 1,0 MC/m² betragen. Die resultierenden, die gesamte Foliendicke durchlaufenden Poren weisen einen Durchmesser von zumeist weniger als 0,1 µm auf.

Zur Vermeidung einer sich in einem zeitlichen Abfall des transmembranen Flusses äussernden Unstabilität, haben sich Hydratationsreaktions-verhindernde stabilisierende Nachbehandlungen als notwendig und wirksam herausgestellt.

Als Aluminiumfolienwerkstoff kommt Reinaluminium oder eine Aluminiumlegierung in Frage. Es hat sich jedoch herausgestellt, dass bei einem Einsatz von Folien mit einem Aluminiumgehalt von mindestens 99,95 %, vorzugsweise mindestens 99,98 % die Gleichmässigkeit und Reproduzierbarkeit von gewünschten Porengrössen und -formen besonders hoch ausfällt.

Eine im Rahmen der Erfindung liegende zusätzliche Massnahme zur Verhinderung eines vorzeitigen Abfalls des transmembranen Flusses besteht darin, die Aluminiumfolien nur einem einseitigen Aetzangriff auszusetzen, beispielsweise indem die andere Folienseite mit einer ätzrestistenten Schicht bedeckt wird, welche in der Regel anschliessend abgelöst wird. Die hierbei entstehenden, die ganze Foliendicke durchlaufenden Poren weisen einen mit fortschreitender Aetztiefe abnehmenden Querschnitt auf. Beim Einsatz als Mikrofilter wird der Filterfluss entgegengesetzt zur ursprünglichen Aetzrichtung angelegt Porenquerschnittsverminderungen durch mit der Porentiefe zunehmenden Ablagerungen werden so durch den anfänglich zunehmenden Porenquerschnitt kompensiert. Bei einer zweckmässigen Ausführung dieses Verfahrens wird die Höchstdicke der Aluminiumfolie auf 100 µm beschränkt.

Die Aetzung kann in einer oder mehreren Stufen beispielsweise in mehreren hintereinander zu durchlaufenden Bädern oder auch in einem Bad ggf. mit mehreren hintereinander zu durchlaufenden Zonen erfolgen. Innerhalb jeder Stufe soll die Stromdichte jedoch konstant gehalten werden, wobei in der Praxis Stromdichteabweichungen von weniger als 5 % die Bezeichnung "konstant" noch zulassen. Dieses galvanostatische Vorgehen ermöglicht die Vermeidung von Mikrolochfrass. Eine bevorzugte Ausführung der erfindungsgemässen Aetzung besteht aus 2 Stufen oder 2 Gruppen von Stufen, wobei die Stromdichte in der ersten Stufe bzw. der ersten Stufen-Gruppe das 1,5 bis 5-fache der Stromdichte in der zweiten Stufe bzw. der zweiten Stufengruppe beträgt. Dies führt zu einer besonders dichten und gleichförmigen Ausbildung der geätzten Poren.

Zur einfacheren Erzielung von Porendurchmessern im Bereich von einigen Hundertstel oder gar Tausendstel μm sieht eine erfindungsgemässe Ausgestaltung des Verfahrens vor, die geätzten Poren vor der stabilisierenden Nachbehandlung durch anodische Oxidation in einem Sperrschichtelektrolyt zu verengen. Hierzu können die bekannten Formierelektrolyten wie Borsäure, Citronensäure, Adipinsäure u.a. verwendet werden. Pro 10 nm Porendurchmesserverengung muss eine Badspannung von etwa 7 V angelegt werden. Diese Vorbehandlung unterstützt zudem bei einigen der erfindungsgemässen Nachbehandlungen die stabilisierende Wirkung.

Eine weitere zweckmässige, die Stabilisierung der Nachbehandlung verstärkende Ausgestaltung des Verfahrens umfasst eine dieser Nachbehandlung vorgeschaltete Aufbringung einer Böhmitschicht auf die geätzte und ggf. mit einer Sperrschicht versehene Folienoberfläche.

Als Hydratationsreaktions-verhindernde, stabilisierende Nachbehandlung wird bevorzugt mindestens eine der folgenden Behandlungen gewählt:
- Anodisation in einem phosphathaltigen Elektrolyt, welcher zweckmässig eine Leitfähigkeit von 1 bis 20 mS aufweist und aus einer wässrigen Lösung von $(NH_4)H_2PO_4$ besteht. Die Badtemperatur soll hierbei 60 bis 100 °C, typischerweise 85 °C betragen. Die anzulegende Spannung liegt zwischen 10 und 500 V, typischerweise bei 20 V.
- Eintauchen in eine Phosphatlösung mit einer Konzentration von 0,5 bis 5 % $(NH_4)H_2PO_4$, zweckmässig während 1 bis 30 Minuten bei einer Badtemperatur von 60 bis 100 °C. Eine bevorzugte Ausführung besteht im Durchströmenlassen dieser Lösung durch die geätzte und ggf. mit einer Sperrschicht versehenen Folie.
- Eintauchen in eine Silikatlösung, bspw. Alkalisilikate, in eine Chromatlösung, bspw. Alkalichromate, oder in eine Chromphosphatlösung.
- Bedeckung der gesamten Folienoberfläche mit einer chemisch stabilen Oxidschicht; im Rahmen der Erfindung besonders geeignet sind $SiO_2$- oder $TiO_2$-Schichten. Das entsprechende Verfahren besteht in der Abscheidung einer organischen Si- bzw. Ti-Verbindung, vorzugsweise vom Typ $Si(OR)_4$ bzw. $Ti(OR)_4$, gelöst in einem geeigneten Lösungsmittel, welches auf die Folienoberfläche aufgebracht wird. Anschliessend wird das Lösungsmittel abgedampft und die zurückbleibende organische Verbindung thermisch zum entsprechenden Oxid oder zu einem Mischoxid mit Aluminium zersetzt. Hierzu eignen sich blanke, böhmitisierte oder mit einer Sperroxidschicht versehene Folien. Ein weiteres erfindungsgemäss bevorzugtes Verfahren zur Bedeckung mit der Oxidschicht besteht im Transportieren einer organischen Si- bzw. Ti-Verbindung mittels eines wasserfreien Trägers auf die blanke, böhmitisierte oder mit einer Sperroxidschicht versehene Folienoberfläche und anschliessender Umwandlung der Si- bzw. Ti-Verbindung in $SiO_2$ bzw. $TiO_2$ durch Hydrolyse.

Es hat sich herausgestellt, dass mit dem erfindungsgemässen Verfahren hergestellte teildurchlässige Membrane infolge ihrer spezifischen Eigenschaften bevorzugt für die Ultrafiltration zu verwenden ist, bei welcher ein Teil einer Flüssigkeit unter Druckeinfluss von einigen Zehntel MPa durch die Membran tritt, darin verteilte Teilchen aus einem Mindestdurchmesserbereich von 1 bis 100 nm -- beispielsweise Kolloide, Makromoleküle oder kleine Bakterien -- zurückgehalten werden.

Ein Verbund dieser Membran mit einer dünnen, porösen Polymermembran hat ebenfalls vorzügliche Eigenschaften im Einsatz als Ultrafilter gezeigt.

Die besondere Struktur der erfindungsgemäss hergestellten Membrane, hoher Flächenanteil, geringer Durchmesser und geringer Abstand der Poren, hat sich als sehr geeignet für den Einsatz als Verbundmembran zur Gastrennung oder Pervaporation erwiesen. Bei solchen Verbundmembranen dient die geätzte und nachbehandelte Aluminiumfolie als Substrat für eine porenfreie, etwa 0,1 bis 2 μm dicke Polymerschicht. Dabei tritt eine Komponente unter Druckeinfluss von 0,1 bis 10 MPa durch die Verbundmembran, indem sie durch die Polymerschicht diffundiert und durch die Poren der Aluminiummembran abgeführt wird, während andere Komponenten zurückgehalten werden. Zur Erreichung hoher Transmembranflüsse ist der hohe Flächenanteil und der geringe Porenabstand von entscheidender Bedeutung. Die geringen Porendurchmesser ihrerseits ermöglichen die erforderliche Stützung der dünnen, belasteten Polymerschicht.

**Patentansprüche**

1. Verfahren zur Herstellung einer teildurchlässigen Membran aus einer Aluminiumfolie mittels elektrolytischer Aetzung, dadurch gekennzeichnet, dass eine Folie von 20 bis 200 μm Dicke im nichtrekristallisierten Zustand mit einer Stromdichte im Bereich von 2 bis 20 kA/m² in einem Elektrolyt galvanostatisch geätzt wird und zur Stabilisierung der Oberfläche Hydratationsreaktions-verhindernd nachbehandelt wird.

2. Verfahren nach Anspruch 2, dadurch gekennzeichnet, dass eine Folie mit einem Aluminiumgehalt von mindestens 99,95 % eingesetzt wird.

3. Verfahren nach Anspruch 1 oder 2, dadurch gekennzeichnet, dass eine Aluminiumfolie von 20

bis 100 μm Dicke verwendet und nur von einer Seite her geätzt wird.

4. Verfahren nach wenigstens einem der Ansprüche 1 bis 3, dadurch gekennzeichnet, dass mit stufenweise jeweils zeitlich konstanter Stromdichte geätzt wird.

5. Verfahren nach wenigstens einem der Ansprüche 1 bis 4, dadurch gekennzeichnet, dass die geätzten Poren vor der stabilisierenden Nachbehandlung durch anodische Oxidation in einem Sperrschichtelektrolyt verengt werden.

6. Verfahren nach wenigstens einem der Ansprüche 1 bis 5, dadurch gekennzeichnet, dass vor der stabilisierenden Nachbehandlung eine Böhmitschicht aufgebracht wird.

7. Verfahren nach wenigstens einem der Ansprüche 1 bis 6, dadurch gekennzeichnet, dass die stabilisierende Nachbehandlung eine anodische Oxidation in einem phosphathaltigen Elektrolyt umfasst.

8. Verfahren nach wenigstens einem der Ansprüche 1 bis 7, dadurch gekennzeichnet, dass die Folie zur stabilisierenden Nachbehandlung in eine Phosphatlösung mit 0,5 bis 5 % $(NH_4)H_2PO_4$ eingetaucht wird.

9. Verfahren nach Anspruch 8, dadurch gekennzeichnet, dass die Phosphatlösung die Folie durchströmt.

10. Verfahren nach wenigstens einem der Ansprüche 1 bis 9, dadurch gekennzeichnet, dass die Folie zur stabilisierenden Nachbehandlung in eine Silikat-, eine Chromat-, oder eine Chromphosphat-Lösung eingetaucht wird.

11. Verfahren nach wenigstens einem der Ansprüche 1 bis 10, dadurch gekennzeichnet, dass die stabilisierende Nachbehandlung eine Bedeckung der Folie mit einer $SiO_2$ oder $TiO_2$-Schicht umfasst.

12. Verfahren nach Anspruch 11, dadurch gekennzeichnet, dass eine organische Si- bzw. Ti-Verbindung aus einer Lösung auf der Folienoberfläche abgeschieden und thermisch zum Oxid zersetzt wird.

13. Verfahren nach Anspruch 11, dadurch gekennzeichnet, dass eine organische Si- bzw. Ti-Verbindung mittels eines wasserfreien Trägers auf die Oberfläche der Folie transportiert wird, und anschliessend zu $SiO_2$ bzw. $TiO_2$ durch Hydrolyse umgewandelt wird.

14. Verwendung der nach wenigstens einem der Ansprüche 1 bis 13 hergestellten Membran zur Ultrafiltration.

15. Verwendung der nach wenigstens einem der Ansprüche 1 bis 13 hergestellten Membran im Verbund mit einer Polymermembran zur Ultrafiltration, Gastrennung oder Pervaporation.

## Claims

1. Process for manufacturing a partially permeable membrane from an aluminium foil by means of elctrolytic etching, characterized in that a foil 20 to 200 μm thick is galvanostatically etched in the non-recrystallized state using a current density in the range from 2 to 20 kA/m² in an electrolyte and that, for the purpose of stabilization of the surface, it is subjected to an aftertreatment which prevents hydration reactions.

2. Process according to Claim 2, characterized in that a foil having an aluminium content of at least 99.95% is used.

3. Process according to Claim 1 or 2, characterized in that an aluminium foil with a thickness of 20 to 100 μm is used and is etched from only one side.

4. Process according to at least one of Claims 1 to 3, characterized in that etching is carried out in stages using a current density which is in each case constant with time.

5. Process according to at least one of Claims 1 to 4, characterized in that the etched pores are narrowed prior to the stabilizing aftertreatment by anodic oxidation in a barrier-layer electrolyte.

6. Process according to at least one of Claims 1 to 5, characterized in that a boehmite layer is applied prior to the stabilizing aftertreatment.

7. Process according to at least one of Claims 1 to 6, characterized in that the stabilizing aftertreatment comprises an anodic oxidation in a phosphate-containing electrolyte.

8. Process according to at least one of Claims 1 to 7, characterized in that, for the stabilizing aftertreatment, the foil is immersed in a phosphate solution containing 0.5 to 5% $(NH_4)H_2PO_4$.

9. Process according to Claim 8, characterized in that the phosphate solution flows through the foil.

10. Process according to at least one of Claims 1 to 9, characterized in that, for the stabilizing aftertreatment, the foil is immersed in a silicate solution, a chromate solution, or a chromium phosphate solution.

11. Process according to at least one of Claims 1 to 10, characterized in that the stabilizing aftertreatment comprises covering the foil with an $SiO_2$ or $TiO_2$ layer.

12. Process according to Claim 11, characterized in that an organic Si or Ti compound is deposited from a solution on the foil surface and is decomposed thermally to form the oxide.

13. Process according to Claim 11, characterized in that an organic Si or Ti compound is transported by means of an anhydrous carrier onto the surface of the foil and then converted to $SiO_2$ or $TiO_2$ by hydrolysis.

14. Use of the membrane manufactured according to at least one of Claims 1 to 13 for ultrafiltration.

15. Use of the membrane manufactured according to at least one of Claims 1 to 13, bonded to a polymer membrane, for ultrafiltration, gas separation or pervaporation.

## Revendications

1. Procédé de fabrication d'une membrane partiellement perméable à partir d'une feuille d'aluminium par attaque électrolytique, caractérisé en ce qu'une feuille épaisse de 20 à 200 μm est attaquée par voie galvanostatique à l'état non recristallisé avec une densité de courant dans la gamme de 2 à 20 kA/m² dans un électrolyte et subit un traitement ultérieur empêchant une réaction d'hydratation pour stabiliser la surface.

2. Procédé selon la revendication 1, caractérisé en ce que l'on utilise une feuille ayant une teneur en aluminium d'au moins 99,95%.

3. Procédé selon la revendication 1 ou 2, caractérisé en ce que l'on utilise une feuille d'aluminium épaisse de 20 à 100 μm qui n'est attaquée que sur un côté.

4. Procédé selon au moins l'une des revendications 1 à 3, caractérisé en ce que l'attaque est réalisée par étapes avec chaque fois une densité de courant constante dans le temps.

5. Procédé selon au moins l'une des revendications 1 à 4, caractérisé en ce que les pores attaqués sont rétrécis par oxydation anodique dans un électrolyte de couche d'arrêt avant le traitement ultérieur stabilisant.

6. Procédé selon au moins l'une des revendications 1 à 5, caractérisé en ce qu'on couche de boehmite est appliquée avant le traitement ultérieur stabilisant.

7. Procédé selon au moins l'une des revendications 1 à 6, caractérisé en ce que le traitement ultérieur stabilisant comprend une oxydation anodique dans un électrolyte contenant du phosphate.

8. Procédé selon au moins l'une des revendications 1 à 7, caractérisé en ce que la feuille est plongée dans une solution de phosphate contenant 0,5 à 5% de $(NH_4)H_2PO_4$ pour le traitement ultérieur stabilisant.

9. Procédé selon la revendication 8, caractérisé en ce que la solution de phosphate traverse la feuille.

10. Procédé selon au moins l'une des revendications 1 à 9, caractérisé en ce que la feuille est plongée dans une solution de silicate, une solution de chromate ou une solution de phosphate de chrome pour le traitement ultérieur stabilisant.

11. Procédé selon au moins l'une des revendications 1 à 10, caractérisé en ce que le traitement ultérieur stabilisant comprend le revêtement de la feuille par une couche de $SiO_2$ ou une couche de $TiO_2$.

12. Procédé selon la revendication 11, caractérisé en ce qu'un composé organique de Si ou de Ti est déposé sur la surface de la feuille à partir de la solution et est transformé par voie thermique en oxyde.

13. Procédé selon la revendication 11, caractérisé en ce qu'un composé organique de Si ou de Ti est transporté sur la surface de la feuille à l'aide d'un véhicule anhydre, puis est converti par hydrolyse en $SiO_2$ ou en $TiO_2$.

14. Utilisation pour l'ultrafiltration de la membrane fabriquée selon au moins l'une des revendications 1 à 13.

15. Utilisation pour l'ultrafiltration, la séparation de gaz ou la pervaporation de la membrane fabriquée selon au moins l'une des revendications 1 à 13 en liaison avec une membrane polymère.